(19) **Europäisches Patentamt / European Patent Office / Office européen des brevets**

(11) **EP 3 742 194 B1**

(12) **EUROPEAN PATENT SPECIFICATION**

(45) Date of publication and mention
of the grant of the patent:
**26.03.2025 Bulletin 2025/13**

(21) Application number: **20175176.5**

(22) Date of filing: **18.05.2020**

(51) International Patent Classification (IPC):
**G01S 11/08** (2006.01)   **H04W 64/00** (2009.01)
**G01S 13/84** (2006.01)

(52) Cooperative Patent Classification (CPC):
**G01S 11/08; G01S 13/84**

(54) **METHOD AND DEVICE FOR MEASURING DISTANCE BETWEEN WIRELESS NODES**

VERFAHREN UND VORRICHTUNG ZUR ABSTANDSMESSUNG ZWISCHEN DRAHTLOSEN KNOTEN

PROCÉDÉ ET DISPOSITIF POUR MESURER LA DISTANCE ENTRE DES NOEUDS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2019 CN 201910423979**

(43) Date of publication of application:
**25.11.2020 Bulletin 2020/48**

(73) Proprietor: **Telink Semiconductor (Shanghai) Co., LTD.**
**Shanghai 201203 (CN)**

(72) Inventor: **JIN, Haipeng**
**Pudong New Area, Shanghai 201203 (CN)**

(74) Representative: **Dantz, Jan Henning et al**
**Loesenbeck - Specht - Dantz**
**Patent- und Rechtsanwälte**
**Am Zwinger 2**
**33602 Bielefeld (DE)**

(56) References cited:
**US-A1- 2002 094 786   US-A1- 2016 178 744**

Description

**FIELD OF THE INVENTION**

The present invention relates to the technical field of distance measurement, and in particular, to a method and a device for measuring a distance between wireless nodes based on active response.

**BACKGROUND OF THE INVENTION**

This section is intended to provide background or context for the embodiments of the invention recited in the claims. The description here is not admitted to be prior art because it is included in this section.

In a traditional radar system, the distance measurement is usually done by transmitting by a transmitter a continuous radio wave, receiving by a receiver the radio wave bounced back from a measured object, and computing the phase difference between the transmitter and the receiver to estimate the distance to the target. However, this radar measurement method has the following problems: it is difficult to use a radar system to measure position in an indoor environment, and the transmitter and receiver need to use a full-duplex communication mode, that is, the phase difference is determined through simultaneous signal transmission and receiving.

US20160178744A1 discloses a method including: transmitting, by a first node, a first signal with a first frequency; receiving a second signal with a second frequency by downmixing the second signal to an intermediate frequency; determining a first value of a first phase for the second frequency; transmitting a third signal with a third frequency, the first frequency and the third frequency having a frequency difference, and receiving a fourth signal with a fourth frequency, the second frequency and the fourth frequency having the frequency difference; determining a second value of the first phase for the fourth frequency, where the first frequency and the second frequency are spaced apart by an amount of the intermediate frequency, and the third frequency and the fourth frequency are spaced apart by the amount of the intermediate frequency. US20020094786A1 discloses system, apparatus, and method for determining the distance between two objects using an indirect propagation delay measurement is disclosed; a frequency hopping scheme (such as the Bluetooth technology) is used to measure the relative phase offset of the received signal between the various frequencies; for a given distance between the objects, the phase offset vs. frequency curve is a straight line with the slope dependent upon the measured distance; after the phase of the received signals is detected, the data is plotted on a curve and the slope is calculated; a wireless slave device remains phase locked with another device in a half-duplex communication mode by employing a low-drift phase locked loop employing a voltage controlled crystal oscillator; the phase locked loop further employs a mechanism that provides immunity from transitory phase slip at a time when the loop is opened.

Therefore, alternatively, the present application proposes a measurement of a distance between wireless nodes that only need to work in the half-duplex mode.

**SUMMARY OF THE INVENTION**

As directed to the above mentioned problem that the radar ranging method in the prior art is difficult to perform indoor ranging and needs to use the full-duplex communication mode, the present invention is directed to a method and a device for measuring a distance between wireless nodes, which calculates a distance between two wireless nodes using the measurement results of active reflection, thereby being able to measuring a distance between wireless nodes working in the half-duplex mode.

The present invention provides the following solutions.

A method for measuring a distance between wireless nodes, comprising:

performing, by a first wireless node I and a second wireless node $R$, a preset measurement of a phase difference in a preset half-duplex communication mode, to determine a first phase difference $H_0$;

synchronously changing a first operating frequency of the first wireless node I and a second operating frequency of the second wireless node R based on a preset frequency difference value;

performing again, by the first wireless node I and the second wireless node R, the preset measurement of the phase difference in the preset half-duplex communication mode, based on the synchronously changed first operating frequency and second operating frequency, to determine a second phase difference $H_1$; and

determining the distance between the first wireless node I and the second wireless node R by performing a differential operation of the first phase difference $H_0$ and the second phase difference $H_1$.

According to the invention, the preset measurement of the phase difference comprises:

generating and transmitting, by the first wireless node I, a first signal based on the first operating frequency;

mixing and receiving, by the second wireless node R, the first signal based on the second operating frequency, and measuring a phase difference between the first signal and a second local signal to determine a first value, wherein, the second local signal is generated by the second wireless node R based on the second operating frequency;

generating and transmitting, by the second wireless node R, a second signal based on the second operating frequency;

mixing and receiving, by the first wireless node I, the second signal based on the first operating frequency, and measuring a phase difference between the second signal and a first local signal to determine a second value, wherein, the first local signal is generated by the first wireless node I based on the first operating frequency; and

determining the first phase difference $H_0$ and the second phase difference $H_1$ by adding the first value to the second value;

wherein, the time when the first wireless node I starts transmitting the first signal is a first time point, the time when the second wireless node R starts transmitting the second signal is a second time point, and the time interval between the first time point and the second time point is fixed in advance.

Optionally, the first signal and the second signal are single frequency carrier signals.

Optionally, the first operating frequency is the same as the second operating frequency or differs by only frequency difference value of one intermediate frequency receiver.

Optionally, determining the first phase difference $H_0$ or the second phase difference $H_1$ from the first value and the second value specifically comprises:

determining the first phase difference $H_0$ from the first value and the second value in response to the first operating frequency and the second operating frequency before being changed; or,

determining the second phase difference $H_1$ from the first value and the second value in response to the changed first operating frequency and second operating frequency.

Optionally, during the period that the first wireless node I is switched from transmitting the first signal to receiving the second signal and during the period that the second wireless node R is switched from receiving the first signal to transmitting the second signal, a RF phase-locked loop is always turned on to maintain phase continuity.

Optionally, the differential operation specifically comprises:
determining the distance r between the first wireless node I and the second wireless node R by a formula $r = c \times (H_1 - H_0)/4\pi\Delta f$, wherein, c is the speed of light, $\Delta f$ is the preset frequency difference value (the difference between the two first frequencies used when measuring $H_0$ and $H_1$).

Optionally, the method further comprises:
performing, by the first wireless node I and the second wireless node R, the preset measurement of the phase difference multiple times in the preset half-duplex communication mode, based on the first operating frequency and the second operating frequency synchronously changed multiple times, to determine the distance between the first wireless node I and the second wireless node R multiple times, thereby improving the accuracy of the measurement through the superposition of multiple measurements.

Optionally, the method further comprises:

connecting the first wireless node I and the second wireless node R through a short cable, in a laboratory environment;

performing, by the first wireless node I and the second wireless node R, the preset measurement of the phase difference repeatedly in the preset half-duplex communication mode, based on the first operating frequency and the second operating frequency before/after being synchronously changed, respectively, to determine a phase difference correction value; and

correcting the determined distance between the first wireless node I and the second wireless node R based on the phase difference correction value.

A device for measuring a distance between wireless nodes, comprising:

a first measurement module configured to perform, by a first wireless node I and a second wireless node R, a preset measurement of a phase difference in a preset half-duplex communication mode, to determine a first phase difference $H_0$;

a frequency changing module configured to synchronously change a first operating frequency of the first wireless node I and a second operating frequency of the second wireless node R based on a preset frequency difference value;

a second measurement module configured to perform again, by the first wireless node I and the second wireless node R, the preset measurement of the phase difference in the preset half-duplex communication mode, based on the synchronously changed first operating frequency and second operating frequency, to determine a second phase difference $H_1$; and

a distance determination module configured to determine the distance between the first wireless node I and the second wireless node R by performing a differential operation of the first phase difference $H_0$ and the second phase difference $H_1$.

According to the invention, the first measurement module and/or the second measurement module are specifically configured to:

generate and transmit, by the first wireless node I, a first signal based on the first operating frequency;

mix and receive, by the second wireless node R, the first signal based on the second operating frequency, and measure a phase difference between the first signal and a second local signal to determine a first value, wherein, the second local signal is generated by the second wireless node R based on the second operating frequency;

generate and transmit, by the second wireless node R, a second signal based on the second operating frequency;

mix and receive, by the first wireless node I, the second signal based on the first operating frequency, and measure a phase difference between the second signal and a first local signal to determine a second value, wherein, the first local signal is generated by the first wireless node I based on the first operating frequency; and

determine the first phase difference $H_0$ and the second phase difference $H_1$ by adding the first value to the second value;

wherein, the time when the first wireless node I starts transmitting the first signal is a first time point, the time when the second wireless node R starts transmitting the second signal is a second time point and the time interval between the first time point and the second time point is fixed in. Preferably,

the first signal and the second signal are single frequency carrier signals,

preferably, the first operating frequency is the same as the second operating frequency or differs by only frequency difference value of one intermediate frequency receiver, and

preferably, during the period that the first wireless node I is switched from transmitting the first signal to receiving the second signal and during the period that the second wireless node R is switched from receiving the first signal to transmitting the second signal, a RF phase-locked loop is always turned on to maintain phase continuity.

Optionally, the first measurement module and/or the second measurement module are specifically configured to:

determine the first phase difference $H_0$ from the first value and the second value in response to the first operating frequency and the second operating frequency before being changed; or,

determine the second phase difference $H_1$ from the first value and the second value in response to the changed first operating frequency and second operating frequency.

Optionally, the distance determination module is specifically configured to:
determine the distance r between the first wireless node I and the second wireless node R by a formula $r = c \times (H_1 - H_0)/4\pi\Delta f$, wherein, c is the speed of light, $\Delta f$ is the preset frequency difference value.

Optionally, the device is further configured to:
perform, by the first wireless node I and the second wireless node R, the preset measurement of the phase difference multiple times in the preset half-duplex communication mode, based on the first operating frequency and the second operating frequency synchronously changed multiple times, to determine the distance between the first wireless node I and the second wireless node R multiple times, thereby improving the accuracy of the measurement through the superposition of multiple measurements.

Optionally, the device further comprises a reference module configured to:

connect the first wireless node I and the second wireless node R through a short cable, in a laboratory environment;

perform, by the first wireless node I and the second wireless node R, the preset measurement of the phase difference repeatedly in the preset half-duplex communication mode, based on the first operating frequency and the second operating frequency before/after being synchronously changed, respectively, to determine a phase difference correction value; and

correct the determined distance between the first wireless node I and the second wireless node R based on the phase difference correction value.

The above at least one technical solution adopted in the embodiments of the present application can achieve the following beneficial effects: in the present invention, according to the technical solutions provided above, there is no need for transceivers of the first wireless node I and the second wireless node R to work simultaneously, a distance between wireless nodes may also be measured for the transceivers working in the half-duplex mode, and during the distance measurement, the first wireless node I and the second wireless node *R* may work at different operating frequencies.

It should be understood that, the above description only shows a summary of the technical solutions of the invention for better understanding the technical measures of the invention so as to implement the invention according to the contents of the disclosure. In order to make the above and other objects, characteristics and advantages of the invention more apparent, specific embodiments of the invention will be illustrated below by examples.

## BRIEF DESCRIPTION OF THE DRAWINGS

By reading the detailed description of the exemplary embodiments below, one of ordinary skills in the art will understand the above described and other advantages and benefits of the invention. The drawings are only provided for exhibiting exemplary embodiments, rather than limiting the invention. Throughout the drawings, the same labels are employed to indicate the same parts. In the drawings:

Fig.1 is a schematic flowchart of a method for measuring a distance between wireless nodes according to an embodiment of the present invention;

Fig.2 is a schematic diagram of communication between a first wireless node I and a second wireless node *R* according to an embodiment of the present invention;

Fig.3 is a schematic flowchart of a method for measuring a distance between wireless nodes according to another embodiment of the present invention;

Fig.4 is a schematic diagram of signals of the first wireless node I and the second wireless node *R* according to an embodiment of the invention;

Fig.5 is a schematic structural diagram of a device for measuring a distance between wireless nodes according to an embodiment of the present invention; and

Fig.6 is a schematic structural diagram of a device for measuring a distance between wireless nodes according to another embodiment of the present invention.

In the drawings, the same or corresponding labels indicate the same or corresponding parts.

## DETAILED DESCRIPTION OF THE EMBODIMENTS

Exemplary embodiments of the present invention will be described in detail below in conjunction with the drawings. Although exemplary embodiments of the invention are shown in the drawings, it should be understood that the invention may be implemented in various forms, rather than being limited to the embodiments illustrated herein. On the contrary, these embodiments are provided for more thoroughly understanding the invention and more fully convey the scope of the invention to those skilled in the art.

In the invention, it should be understood that, terms such as "include" or "comprise", etc., indicate the existence of the characteristics, figures, steps, actions, components and parts disclosed in the invention or combinations thereof, without excluding the existence of one or more other characteristics, figures, steps, actions, components, parts or combinations thereof.

Additionally, it should be further noted that, the embodiments of the invention and the characteristics in the embodiments may be combined to each other in the case of no conflict. The invention will be illustrated in detail below referring to the drawings and in conjunction with the embodiments.

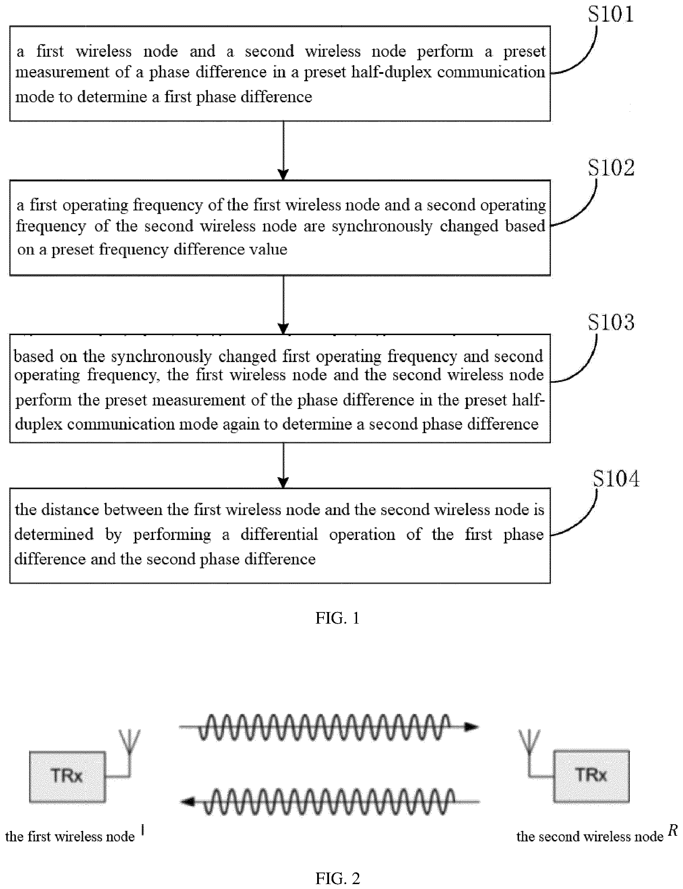

An embodiment of the present invention provides a method for measuring a distance between wireless nodes. FIG. 1 shows a flowchart of a method for measuring a distance between nodes according to an embodiment of the present invention. As shown in FIG. 1, the method includes but is not limited to Steps S101-S104. Specifically, the Steps include:

Step S101: a first wireless node I and a second wireless node R perform a preset measurement of a phase difference in a preset half-duplex communication mode, to determine a first phase difference $H_0$;

Step S102: a first operating frequency of the first wireless node I and a second operating frequency of the second wireless node R are synchronously changed based on a preset frequency difference value;

Specifically, in the process of changing the first operating frequency and the second operating frequency ($f_I$, $f_R$), a specified frequency difference value $\Delta f$ is obtained, and a set of updated first operating frequency and second operating frequency ($f_I{}'$, $f_R{}'$) is obtained by the following formula:

$$f_R{}' = f_R + \Delta f, \quad f_I{}' = f_I + \Delta f, \quad \text{or} \quad f_R{}' = f_R - \Delta f, \quad f_I{}' = f_I - \Delta f.$$

Step S103: based on the synchronously changed first operating frequency and second operating frequency, the first wireless node I and the second wireless node R perform the preset measurement of the phase difference in the preset half-duplex communication mode again, to determine a second phase difference $H_1$;

Step S104: the distance between the first wireless node I and the second wireless node R is determined by performing a differential operation of the first phase difference $H_0$ and the second phase difference $H_1$.

Specifically, referring to FIG. 2, the first wireless node I and the second wireless node R are exemplarily shown, wherein the circuit structure of the first wireless node I is the same as the circuit structure of the second wireless node R, each of the first wireless node I and the second wireless node R is a transceiver TRx including a signal transmitting circuit TX and a signal receiving circuit RX. The half-duplex communication refers to a communication method that may achieve two-way communication, which cannot be performed in both directions simultaneously and has to be performed alternately. That is, in this embodiment, the first wireless node I and the second wireless node R may alternately perform the bidirectional signal transmission operation. Preferably, the time interval for alternate signal transmission is predetermined.

In addition, during the preset half-duplex communication process between the first wireless node I and the second wireless node R, the first wireless node I and the second wireless node R respectively perform signal transmission and reception operations at their respective operating frequencies. Specifically, in the two preset measurements of the phase difference in Steps S101 and S103, the first wireless node I performs signal transmission or reception operations at the operating frequency $f_I$ and the operating frequency $f_I{}'$, respectively, and accordingly, the second wireless node R performs signal transmission or reception operations at the operating frequency $f_R$ and the operating frequency $f_R{}'$, respectively. Wherein, in the operation of receiving a signal by the second wireless node R, since the second wireless node R has a phase-locked loop PLL, the phase of the undebugged carrier signal received by the second wireless node R may be subtracted from the phase of the local signal in the PLL in the phase detector PD, and then the phase differences $P_R$ and $P_R{}'$ may be obtained before and after changing the operating frequencies, respectively. After a fixed time interval, the second wireless node R performs signal transmission operations at the operating frequency $f_R$ and the operating frequency, respectively. Accordingly, in the operation of receiving a signal by the first wireless node I, before and after the change of the operating frequencies, the first wireless node I may perform signal receiving operations at the operating frequency $f_I$ and the operating frequency $f_I{}'$, respectively, where the first wireless node I also has a phase-locked loop PLL, so that the phase of the undebugged carrier signal received by the first wireless node I may be subtracted from the phase of the PLL in the phase detector PD, and then the phase differences $P_I$ and $P_I{}'$ are obtained. Wherein, $f_I{}' - f_I = f_R{}' - f_R = \Delta f$, that is, the first operating frequency and the second operating frequency are changed synchronously by the same frequency difference. In the present invention, the first operating frequency $f_I{}'$ and the second operating frequency $f_R{}'$ having the same frequency difference $\Delta f$ from the original first operating frequency $f_I$ and second operating frequency $f_R$ are introduced, and then the half-duplex communication steps and the preset measurement of the phase difference are performed repeatedly. It can be understood that, since the phase differences $P_R$, $P_R'$, $P_I$ and $P_I'$ are linearly related to the measurement time, the time factor in the phase differences $P_R$, $P_R'$, $P_I$ and $P_I'$ may be removed by correspondingly designing the half-duplex communication switching process and the time points of preset measurement of the phase difference before and after changing the operating frequencies, and then the distance between the first wireless node I and the second wireless node R may be determined by performing a differential operation of the above phase differences $P_R$, $P_R'$, $P_I$ and $P_I'$ and the set $\Delta f$.

In this embodiment, distance measurement in a radio network with multiple nodes may be based on phase measurement. Wherein, in half-duplex communication, carrier signals having corresponding operating frequencies are transmitted alternately by two nodes, the phase of the wave received by the opposite node is analyzed and stored as a measured value, and then the operating frequencies of the two nodes are changed by the same frequency difference, the above communication and measurement process is repeated and the distance r between the stations may be calculated. In the present invention, according to the technical solutions provided above, there is no need for transceivers of the first wireless node I and the second wireless node $R$ to work simultaneously, a distance between wireless nodes may also be measured for the transceivers working in the half-duplex mode, and during the distance measurement, the first wireless node I and the second wireless node $R$ may work at different operating frequencies.

Based on the method for measuring a distance between wireless nodes in FIG. 1, some embodiments of the present application further provide some specific implementation solutions and extension solutions for the method for measuring a distance between wireless nodes, which will be described below.

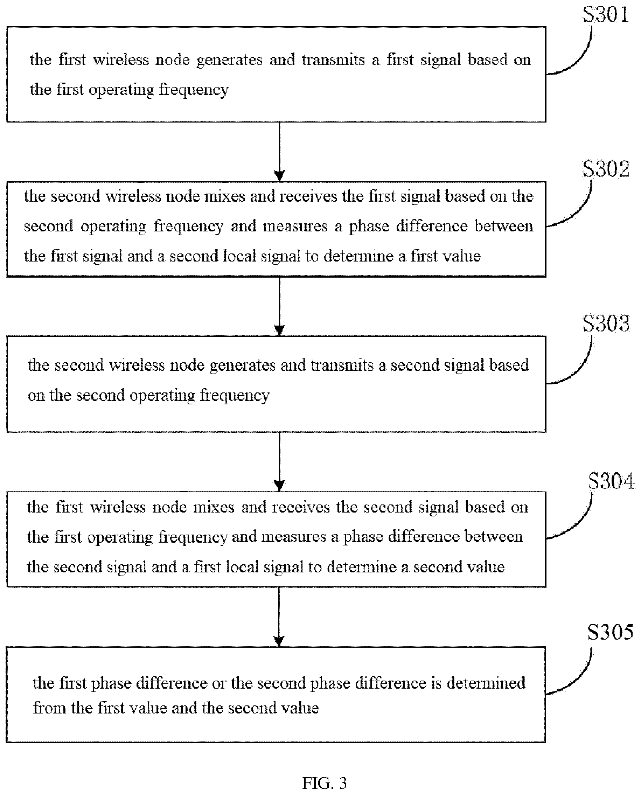

In an embodiment, further, as shown in FIG. 3 the first wireless node I and the second wireless node R performing the preset measurement of the phase difference in a preset half-duplex communication mode in Steps S101 and S103 specifically comprise the following Steps S301 ~ S305:

Step S301: the first wireless node I generates and transmits a first signal based on the first operating frequency;
Step S302: the second wireless node $R$ mixes and receives the first signal based on the second operating frequency, and measures a phase difference between the first signal and a second local signal to determine a first value, wherein, the second local signal is generated by the second wireless node $R$ based on the second operating frequency;
Step S303: the second wireless node $R$ generates and transmits a second signal based on the second operating frequency;
Step S304: the first wireless node I mixes and receives the second signal based on the first operating frequency, and measures a phase difference between the second signal and a first local signal to determine a second value, wherein, the first local signal is generated by the first wireless node I based on the first operating frequency;
Step S305: the first phase difference $H_0$ or the second phase difference $H_1$ is determined from the first value and the second value;
wherein, the time when the first wireless node I starts transmitting the first signal is a first time point, the time when the second wireless node $R$ starts transmitting the second signal is a second time point, and the time interval between the first time point and the second time point is fixed in advance.

In an embodiment, the first signal and the second signal are single frequency carrier signals. In an embodiment, the first operating frequency is the same as the second operating frequency or differs by only frequency difference value of one intermediate frequency receiver.

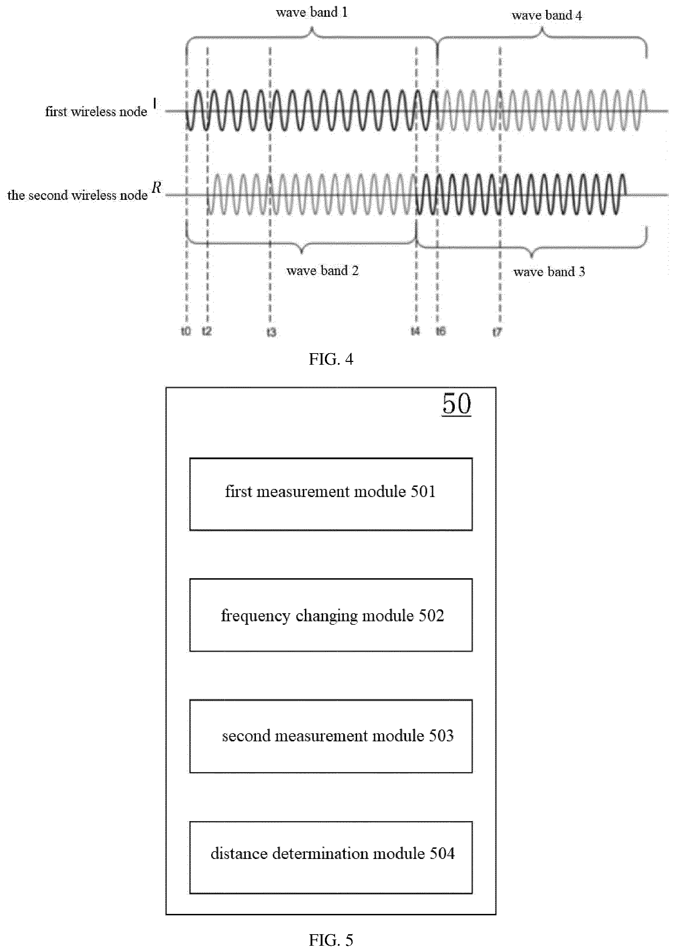

For example, referring to FIG. 4, the preset measurement of the phase difference before the change of the operating frequency is used as an example for description, wave band 1 shows Step S301, the first wireless node I generates and transmits a first signal based on the first operating frequency; wave band 2 shows Step S302, the second wireless node $R$ receives the first signal based on the second operating frequency, wherein, at one or more predetermined measurement time points (for example, $t_2$), the second wireless node $R$ performs phase comparison through the phase detector PD in the phase-locked loop PLL therein, so that the phase of the received undebugged carrier signal may be subtracted from the phase of the PLL in the phase detector PD to obtain the first value (phase measurement value) $P_R$; After a fixed time interval (for example, $t_4 - t_0$), wave band 3 shows Step S303, the second wireless node $R$ generates and transmits a second signal based on the second operating frequency, optionally, phase-locked loop may be used for phase locking to avoid the loss of phase continuity when switching between signal receiving and signal transmission; wave band 4 shows Step S304, the first wireless node I receives the second signal based on the first operating frequency, wherein, at another one or more predetermined measurement time points (for example, $t_6$), the first wireless node I performs phase comparison through the phase detector PD in the phase-locked loop PLL therein, so that the phase of the received undebugged carrier signal may be subtracted from the phase of the PLL in the phase detector PD to obtain the second value (phase measurement value) $P_I$. Accordingly, after the change of the operating frequency, according to the same steps, the first value $P'_R$ may be obtained by the second wireless node R, and the second value $P'_I$ may be obtained by the first wireless node I. Furthermore, the first phase difference $H_0$ or the second phase difference $H_1$ is determined based on the first value and the second value.

According to the invention, further, determining the first phase difference $H_0$ or the second phase difference $H_1$ from the first value and the second value in Step S305 specifically comprises:

determining the first phase difference $H_0$ from the first value and the second value in response to the preset operating frequency group before the change; or,
determining the second phase difference $H_1$ from the first value and the second value in response to the changed preset operating frequency group.

Specifically, for the first operating frequency $f_I$ and the second operating frequency $f_R$ before the change, the first phase difference $H_0$ is determined from the first value $P_R$ and the second value $P_I$ as: $H_0 = P_R + P_I$. For the changed first operating frequency $f'_I$ and second operating frequency $f'_R$, the second phase difference $H_1$ is determined from the first value $P'_R$ and the second value $P'_I$ as: $H_1 = P'_R + P'_I$.

In an embodiment, further, during the period that the second wireless node R is switched from receiving the first signal to transmitting the second signal, a RF phase-locked loop is always turned on to maintain phase continuity.

It can be understood that the working principle of the phase-locked loop is to detect a phase difference between an input signal and an output signal, convert the detected phase difference signal into a voltage signal output through a phase detector, form a control voltage of a voltage-controlled oscillator after being filtered by a low-pass filter, control the frequency of the oscillator output signal, and then feedback the frequency and phase of the oscillator output signal to the phase detector through the feedback path. During the operation of the phase-locked loop, when the frequency of the output signal reflects the frequency of the input signal proportionally, the output voltage and the input voltage maintain a fixed phase difference, so that the phases of the output voltage and the input voltage are locked. Accordingly, phase continuity is not lost when switching between signal receiving and signal transmission.

In an embodiment, further, determining the distance between the first wireless node I and the second wireless node R from the first phase difference $H_0$ and the second phase difference $H_1$ in Step S104 specifically comprises: determining the distance r between the first wireless node I and the second wireless node R by a formula $r = c \times (H_1 - H_0)/4\pi\Delta f$, wherein, c is the speed of light, $\Delta f$ is the preset frequency difference value.

Specifically, referring to FIG. 4, according to the phase formula $2\pi ft + \emptyset$, it can be known that the phases of the first wireless node I and the second wireless node R can be expressed as: $2\pi f_I t + \emptyset_I$, $2\pi f_R t + \emptyset_R$, respectively, further, the theoretical derivation process of each phase difference operation is as follows:

(1) the phase difference calculation is performed at measurement point $t_2$;
Wherein, the phase of the first signal having the first operating frequency transmitted from the first wireless node I is: $2\pi f_I t_0 + \emptyset_I$;
The phase of the second local signal generated by the second wireless node R is: $2\pi f_R t_2 + \emptyset_R$, which can be further extended to:

$$2\pi f_R t_0 + 2\pi f_R \frac{r}{c} + 2\pi f_R (D_{It} + D_{Rr}) + \emptyset_R.$$

In summary, the phase difference $P_R$ between the first signal and the second local signal may be determined by the following formula (a):

$$P_R = 2\pi (f_R - f_I)t_0 + 2\pi f_R \frac{r}{c} + 2\pi f_R (D_{It} + D_{Rr}) + \emptyset_R - \emptyset_I \quad (a)$$

Wherein, $f_I$ is the first operating frequency, $f_R$ is the second operating frequency, $t_0$ is a time point when the first wireless node I transmits the first signal based on the first operating frequency, r is the distance between the first wireless node I and the second wireless node $R$, c is the speed of light, $D_{It}$; is a hardware delay when the first wireless node I transmits the first signal, $D_{Rr}$ is a hardware delay when the second wireless node $R$ receives the first signal, $\varnothing_R$ is the initial phase of the signal on the second wireless node $R$ side, and $\varnothing_I$ is the initial phase of the signal on the first wireless node I side.

(2) the phase difference calculation is performed at measurement point $t_6$;
Similarly, the phase difference $P_I$ between the second signal and the first local signal may be determined by the following formula (b):

$$P_I = 2\pi(f_I - f_R)t_4 + 2\pi f_I \frac{r}{c} + 2\pi f_I(D_{Rt} + D_{Ir}) - \varnothing_R + \varnothing_I + \Delta\theta_{IR} \quad (b)$$

Wherein, $f_I$ is the value of the first operating frequency, $f_R$ is the value of the second operating frequency, $t_4$ is a time point when the second wireless node $R$ transmits the second signal, r is the distance between the first wireless node I and the second wireless node $R$, c is the speed of light, $D_{It}$ is a hardware delay when the first wireless node I receives the second signal, $D_{Rr}$ is a hardware delay when the second wireless node R transmits the second signal, $\varnothing_R$ is the initial phase of the signal on the second wireless node $R$ side, $\varnothing_I$ is the initial phase of the signal on the first wireless node I side, and $\Delta\theta_{IR}$ is the phase error.

(3) the first phase difference $H_0$ is determined as:

$$H_0 = P_R + P_I = \frac{2\pi(f_R + f_I)r}{c} + 2\pi(f_I - f_R)(t_4 - t_0) + 2\pi f_R(D_{It} + D_{Rr}) +$$
$$2\pi f_I(D_{Rt} + D_{Ir}) + \Delta\theta_{IR} \quad (c)$$

(4) Similarly, the second phase difference $H_1$ is determined by using the same method as the above-mentioned derivation processes (1) to (3) as:

$$H_1 = P_R{}' + P_I{}' = \frac{2\pi(f_R{}' + f_I{}')r}{c} + 2\pi(f_I{}' - f_R{}')(t_4 - t_0) + 2\pi f_R{}'(D_{It} + D_{Rr}) +$$
$$2\pi f_I{}'(D_{Rt} + D_{Ir}) + \Delta\theta_{IR}{}' \quad (d)$$

(5) the following operation may be performed based on the first phase difference $H_0$ and the second phase difference $H_1$ obtained above:

$$H_{10} = H_1 - H_0 = 4\pi\Delta f \frac{r}{c} + 2\pi\Delta f(D_{It} + D_{Rr} + D_{Rt} + D_{Ir}) + \Delta\theta_{IR}{}' - \Delta\theta_{IR} \quad (e)$$

Further, the hardware delay $(D_{It} + D_{Rr} + D_{Rt} + D_{Ir})$ may be integrated into D, the phase error $\Delta\theta_{IR}{}' - \Delta\theta_{IR}$ may be integrated into $\Delta\theta$, and the above formula may be simplified to:

$$H_{10} = H_1 - H_0 = 4\pi\Delta f \frac{r}{c} + 2\pi\Delta f D + \Delta\theta \quad (f)$$

Since the value of the phase error $\Delta\theta$ is very small, the value of the hardware delay $D$ can be obtained through pre-measurement, so a formula can be obtained:

$$r = c \times (H_1 - H_0 - 2\pi\Delta f D)/4\pi\Delta f \quad (g)$$

In the present invention, $H_1$ and $H_0$ in the above formula (g) are obtained after calculation based on the measured values $P_R$ and $P_I$, $P_R{'}$ and $P_I{'}$, respectively, the speed of light c, the preset frequency difference value $\Delta f$ and the hardware delay D are all known parameters, and thus, the distance between the first wireless node I and the second wireless node $R$ may be obtained according to the above formula.

In an embodiment, further, in order to obtain more accurate measurement results and reduce measurement errors, the method further comprises:

performing, by the first wireless node I and the second wireless node R, the preset measurement of the phase difference multiple times in the preset half-duplex communication mode, based on the first operating frequency and the second operating frequency synchronously changed multiple times, to determine the distance between the first wireless node I and the second wireless node R multiple times.

Specifically, the first operating frequency of the first wireless node I and the second operating frequency of the second wireless node R may be synchronously changed multiple times according to another one or more preset frequency difference values, and then the first wireless node I and the second wireless node R repeat the steps such as S101 to S104 multiple times based on the first operating frequency and second operating frequency after each change, for example, the third phase difference $H_3$ and the fourth phase difference $H_4$ are obtained based on another preset frequency difference value $\Delta f'$, and then the distance $r'$ is determined by the formula $r' = c \times (H_4 - H_3 - 2\pi\Delta f'D)/4\pi\Delta f'$. Furthermore, the distance between the first wireless node I and the second wireless node R is finally determined according to the average value of $r'$ and $r$. It can be understood that through the superposition of multiple measurements, the above multiple measurements can obtain a measurement result with higher accuracy.

In an embodiment, since phase errors and hardware errors are unavoidable in all measurements. Further, this embodiment further proposes a method for reducing errors based on the distance measurement method shown in FIG 1. The method further comprises:

connecting the first wireless node I and the second wireless node R through a short cable, in a laboratory environment;
performing, by the first wireless node I and the second wireless node R, the preset measurement of the phase difference repeatedly, based on the first operating frequency and the second operating frequency before/after being synchronously changed, respectively, to determine a phase difference correction value; and
correcting the determined distance between the first wireless node I and the second wireless node $R$ based on the phase difference correction value.

Theoretically, it can be seen from the above formula (f), after performing the preset phase difference operation as described above, the first wireless node I and the second wireless node $R$ that perform half-duplex communication through a short cable can determine $\Delta H$ as:

$$\Delta H = 4\pi\Delta f \frac{r'}{c} + 2\pi\Delta f D + \Delta\theta \quad (h)$$

Wherein, $r'$ is the distance of the short cable communication, $\Delta f$ is the preset frequency difference value, $\Delta\theta$ is the phase error, and $D$ is the hardware error.

It can be understood that since the distance $r'$ during the short cable communication is extremely small relative to the speed of light c, $4\pi\Delta f \frac{r'}{c}$ may be ignored, and $\Delta H = 2\pi\Delta f D + \Delta\theta$ may be used as the phase difference correction value. Furthermore, the determined distance between the first wireless node I and the second wireless node $R$ is corrected according to the phase difference correction value, and the phase error and hardware error may be corrected by a simple calculation step and a very small calculation amount.

Fig.5 is a schematic structural diagram of a device for measuring a distance between wireless nodes, which device is used for preforming a method for measuring a distance between wireless nodes as shown in Fig.1. Referring to FIG. 5, the device 50 specifically comprises:

a first measurement module 501 configured to perform, by a first wireless node I and a second wireless node $R$, a preset measurement of a phase difference during a half-duplex communication between the first wireless node I and the second wireless node R , to determine a first phase difference $H_0$;

a frequency changing module 502 configured to synchronously change a first operating frequency of the first wireless node I and a second operating frequency of the second wireless node R based on a preset frequency difference value;

a second measurement module 503 configured to perform again, by the first wireless node I and the second wireless node R, the preset measurement of the phase difference, based on the synchronously changed first operating frequency and second operating frequency, to determine a second phase difference $H_1$; and

a distance determination module 504 configured to determine the distance between the first wireless node I and the second wireless node R by performing a differential operation of the first phase difference $H_0$ and the second phase difference $H_1$.

In this embodiment, distance measurement in a radio network with multiple nodes may be based on phase measurement. Wherein, in half-duplex communication, carrier signals having corresponding operating frequencies are transmitted alternately by two nodes, the phase of the wave received by the opposite node is analyzed and stored as a measured value, and then the operating frequencies of the two nodes are changed by the same frequency difference, the above communication and measurement process is repeated and the distance r between the stations may be calculated. In the present invention, according to the technical solutions provided above, there is no need for transceivers of the first wireless node I and the second wireless node R to work simultaneously, a distance between wireless nodes may also be measured for the transceivers working in the half-duplex mode, and during the distance measurement, the first wireless node I and the second wireless node R may work at different operating frequencies, thus the measurement requirement is low.

Based on the device for measuring a distance between wireless nodes in FIG. 5, some embodiments of the present application further provide some specific implementation solutions and extension solutions for the device for measuring a distance between wireless nodes, which will be described below.

Acccording to the invention, the first measurement module and/or the second measurement module are specifically configured to:

generate and transmit, by the first wireless node I, a first signal based on the first operating frequency;

mix and receive, by the second wireless node R, the first signal based on the second operating frequency, and measure a phase difference between the first signal and a second local signal to determine a first value, wherein, the second local signal is generated by the second wireless node R based on the second operating frequency;

generate and transmit, by the second wireless node R, a second signal based on the second operating frequency;

mix and receive, by the first wireless node I, the second signal based on the first operating frequency, and measure a phase difference between the second signal and a first local signal to determine a second value, wherein, the first local signal is generated by the first wireless node I based on the first operating frequency; and

determine the first phase difference $H_0$ and the second phase difference $H_1$ by adding the first value to the second value;

wherein, the time when the first wireless node I starts transmitting the first signal is a first time point, the time when the second wireless node R starts transmitting the second signal is a second time point, and the time interval between the first time point and the second time point is fixed in advance.

Optionally, the first signal and the second signal are single frequency carrier signals.

Optionally, the first operating frequency is the same as the second operating frequency or differs by only frequency difference value of one intermediate frequency receiver.

Optionally, the first measurement module and/or the second measurement module are specifically configured to:

determine the first phase difference $H_0$ from the first value and the second value in response to the first operating frequency and the second operating frequency before being changed; or,

determine the second phase difference $H_1$ from the first value and the second value in response to the changed first operating frequency and second operating frequency.

Optionally, during the period that the first wireless node I is switched from transmitting the first signal to receiving the second signal and during the period that the second wireless node R is switched from receiving the first signal to transmitting the second signal, a RF phase-locked loop is always turned on to maintain phase continuity.

Optionally, the distance determination module is specifically configured to:

determine the distance r between the first wireless node I and the second wireless node R by a formula $r = c \times (H_1 - H_0)/4\pi\Delta f$, wherein, c is the speed of light, $\Delta f$ is the preset frequency difference value.

Optionally, the device is further configured to:

perform, by the first wireless node I and the second wireless node $R$, the preset measurement of the phase difference multiple times in the preset half-duplex communication mode, based on the first operating frequency and the second operating frequency synchronously changed multiple times, to determine the distance between the first wireless node I and the second wireless node $R$ multiple times, thereby improving the accuracy of the measurement through the superposition of multiple measurements.

Optionally, the device further comprises a reference module configured to:

connect the first wireless node I and the second wireless node $R$ through a short cable, in a laboratory environment;
perform, by the first wireless node I and the second wireless node R, the preset measurement of the phase difference repeatedly in the preset half-duplex communication mode, based on the first operating frequency and the second operating frequency before/after being synchronously changed, respectively, to determine a phase difference correction value; and
correct the determined distance between the first wireless node I and the second wireless node $R$ based on the phase difference correction value.

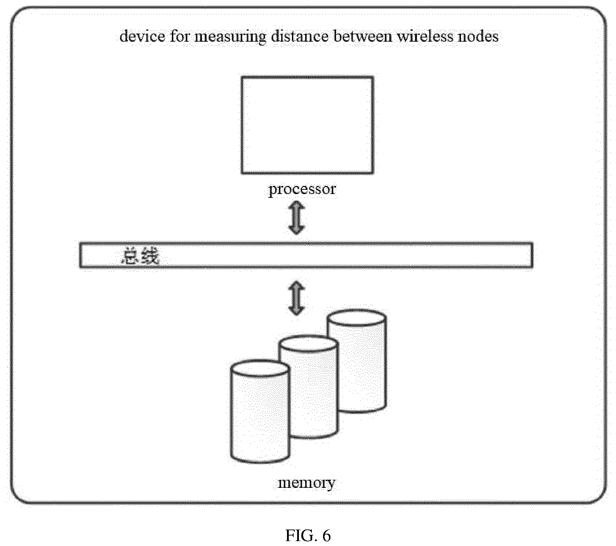

Fig.6 is a schematic diagram of a device for measuring a distance between wireless nodes according to an embodiment of the present

The device comprises:

at least one processor; and
a memory connected to the at least one processor;
wherein, the memory stores instructions executable by the at least one processor, which instructions are executed by the at least one processor to enable the at least one processor to:

Step S101: perform, by a first wireless node I and a second wireless node $R$, a preset measurement of a phase difference in a preset half-duplex communication mode, to determine a first phase difference $H_0$;
Step S102: synchronously change a first operating frequency of the first wireless node I and a second operating frequency of the second wireless node $R$ based on a preset frequency difference value;
Step S103: perform again, by the first wireless node I and the second wireless node $R$, the preset measurement of the phase difference in the preset half-duplex communication mode, based on the synchronously changed first operating frequency and second operating frequency, to determine a second phase difference $H_1$;
Step S104: determine the distance between the first wireless node I and the second wireless node $R$ by performing a differential operation of the first phase difference $H_0$ and the second phase difference $H_1$.

According to some embodiments of the present application, in most gerneral terms, there is provided a non-volatile computer storage medium for measuring a distance between wireless nodes corresponding to the above method for measuring a distance between wireless nodes, on which computer executable instructions are stored, when run by the processor, the computer executable instructions are set to:

Step S101: perform, by a first wireless node I and a second wireless node $R$, a preset measurement of a phase difference in a preset half-duplex communication mode, to determine a first phase difference $H_0$;
Step S102: synchronously change a first operating frequency of the first wireless node I and a second operating frequency of the second wireless node $R$ based on a preset frequency difference value;
Step S103: perform again, by the first wireless node I and the second wireless node $R$, the preset measurement of the phase difference in the preset half-duplex communication mode, based on the synchronously changed first operating frequency and second operating frequency, to determine a second phase difference $H_1$;
Step S104: determine the distance between the first wireless node I and the second wireless node R by performing a differential operation of the first phase difference $H_0$ and the second phase difference $H_1$.

All the embodiments in the specification are described in a progressive manner, the same or similar parts among the various embodiments can refer to each other, and the emphasis of each embodiment is different from other embodiments. In particular, as for the embodiments of device, equipment and computer readable storage medium, they are substantially similar to the embodiments of method, so the description is relatively simple, and the related parts refer to the illustration of the parts of the embodiments of method.

The device, equipment and computer readable storage medium provided in the embodiments of the present application correspond to the method in one-to-one correspondence. Therefore, the device, equipment and computer readable storage medium also have beneficial technical effects similar to their corresponding method. The beneficial technical effects of the method are described in detail above, therefore, the beneficial technical effects of the device, equipment and computer readable storage medium will not be repeated here.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

In a typical configuration, the computing device includes one or more processors (CPUs), input/output interfaces, network interfaces and memory.

Memory may include non-permanent memory, random access memory (RAM) and/or non-volatile memory in computer-readable media, such as read only memory (ROM) or flash memory (flash RAM). Memory is an example of computer-readable media.

Computer-readable media, including permanent and non-permanent, removable and non-removable media, may store information by any method or technology. The information may be computer readable instructions, data structures, modules of programs, or other data. Examples of computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only compact disc read-only memory (CD-ROM), digital versatile disc (DVD) or other optical storage, magnetic tape cassettes, magnetic tape magnetic disk storage or other magnetic storage devices or any other non-transmission media, for storing information that may be accessed by computing devices.

It should also be noted that the term "comprise", "contain" or any other variant is intended to encompass the non-exclusive inclusion, so that the process, method, commodity or equipment including a series of elements not only includes those elements, but also includes other elements which are not listed clearly or includes the elements inherent in such process, method, commodity or equipment. Without more restrictions, the element defined by the sentence "include a......" does not preclude the existence of another identical element in the process, method, commodity or equipment including the element.

The above are only embodiments of the present application and are not intended to limit the present application. For those skilled in the art, the present application may have various modifications and changes. Any modification, equivalent replacement, improvement, etc. made within the scope of the claims shall be included in the scope of the claims of the present application.

## Claims

1. A method for measuring a distance between wireless nodes, comprising:

performing, by a first wireless node (I) and a second wireless node (R), a preset measurement of a phase difference in a preset half-duplex communication mode, to determine a first phase difference $H_0$;
synchronously changing a first operating frequency of the first wireless node (I) and a second operating frequency of the second wireless node (R) based on a preset frequency difference value;

performing again, by the first wireless node (I) and the second wireless node (R), the preset measurement of the phase difference in the preset half-duplex communication mode, based on the synchronously changed first operating frequency and second operating frequency, to determine a second phase difference $H_1$; and determining the distance between the first wireless node (I) and the second wireless node *(R)* by performing a differential operation of the first phase difference $H_0$ and the second phase difference $H_1$,

**characterized in that** the preset measurement of the phase difference comprises:

generating and transmitting, by the first wireless node (I), a first signal based on the first operating frequency;
mixing and receiving, by the second wireless node (R), the first signal based on the second operating frequency, and measuring a phase difference between the first signal and a second local signal to determine a first value $P_R$, $P'_R$, wherein
the second local signal is generated by the second wireless node (R) based on the second operating frequency;
generating and transmitting, by the second wireless node *(R),* a second signal based on the second operating frequency;
mixing and receiving, by the first wireless node (I), the second signal based on the first operating frequency, and measuring a phase difference between the second signal and a first local signal to determine a second value $P_I$, $P'_I$, wherein
the first local signal is generated by the first wireless node (I) based on the first operating frequency; and
determining the first phase difference $H_0 = P_R + P_I$ and the second phase difference $H_1 = P'_R + P'_I$ by adding the first value to the second value;
wherein, the time when the first wireless node (I) starts transmitting the first signal is a first time point, the time when the second wireless node (R) starts transmitting the second signal is a second time point, and the time interval between the first time point and the second time point is fixed in advance.

2. The method according to claim 1, wherein, the first signal and the second signal are single frequency carrier signals.

3. The method according to claim 1, wherein, the first operating frequency is the same as the second operating frequency or differs by only frequency difference value of one intermediate frequency receiver.

4. The method according to claim 1, wherein, determining the first phase difference $H_0$ or the second phase difference $H_1$ from the first value and the second value specifically comprises:

determining the first phase difference $H_0$ from the first value and the second value in response to the first operating frequency and the second operating frequency before being changed; or,
determining the second phase difference $H_1$ from the first value and the second value in response to the changed first operating frequency and second operating frequency.

5. The method according to claim 1, wherein, during the period that the first wireless node (I) is switched from transmitting the first signal to receiving the second signal and during the period that the second wireless node (R) is switched from receiving the first signal to transmitting the second signal, a RF phase-locked loop is always turned on to maintain phase continuity.

6. The method according to claim 1, wherein, the differential operation specifically comprises:
determining the distance r between the first wireless node (I) and the second wireless node *(R)* by a formula $r = c \times (H_1 - H_0)/4\pi\Delta f$, wherein, c is the speed of light, $\Delta f$ is the preset frequency difference value.

7. The method according to any one of claims 1 to 6, further comprising:
performing, by the first wireless node (I) and the second wireless node (R), the preset measurement of the phase difference multiple times in the preset half-duplex communication mode, based on the first operating frequency and the second operating frequency synchronously changed multiple times, to determine the distance between the first wireless node (I) and the second wireless node (R) multiple times, thereby improving the accuracy of the measurement through the superposition of multiple measurements.

8. The method according to any one of claims 1 to 6, further comprising:

connecting the first wireless node (I) and the second wireless node (R) through a short cable, in a laboratory environment;

performing, by the first wireless node (I) and the second wireless node (R), the preset measurement of the phase difference repeatedly in the preset half-duplex communication mode, based on the first operating frequency and the second operating frequency before/after being synchronously changed, respectively, to determine a phase difference correction value; and

correcting the determined distance between the first wireless node (I) and the second wireless node (R) based on the phase difference correction value.

9. A device for measuring a distance between wireless nodes, comprising:

a first measurement module (501) configured to perform, by a first wireless node (I) and a second wireless node (R), a preset measurement of a phase difference in a preset half-duplex communication mode, to determine a first phase difference $H_0$;
a frequency changing module (502) configured to synchronously change a first operating frequency of the first wireless node (I) and a second operating frequency of the second wireless node (R) based on a preset frequency difference value;
a second measurement module (503) configured to perform again, by the first wireless node (I) and the second wireless node (R), the preset measurement of the phase difference in the preset half-duplex communication mode, based on the synchronously changed first operating frequency and second operating frequency, to determine a second phase difference $H_1$; and
a distance determination module (504) configured to determine the distance between the first wireless node (I) and the second wireless node (R) by performing a differential operation of the first phase difference $H_0$ and the second phase difference $H_1$,
**characterized in that** the first measurement module (501) and/or the second measurement module (503) are specifically configured to:

generate and transmit, by the first wireless node (I), a first signal based on the first operating frequency;
mix and receive, by the second wireless node (R), the first signal based on the second operating frequency, and measure a phase difference between the first signal and a second local signal to determine a first value $P_R$, $P'_R$, wherein
the second local signal is generated by the second wireless node (R) based on the second operating frequency;
generate and transmit, by the second wireless node (R), a second signal based on the second operating frequency;
mix and receive, by the first wireless node (I), the second signal based on the first operating frequency, and measure a phase difference between the second signal and a first local signal to determine a second value $P_I$, $P'_I$, wherein the first local signal is generated by the first wireless node (I) based on the first operating frequency; and
determine the first phase difference $H_0 = P_R + P_I$ and the second phase difference $H_1 = P'_R + P'_I$ by adding the first value to the second value;
wherein, the time when the first wireless node (I) starts transmitting the first signal is a first time point, and the time when the second wireless node (R) starts transmitting the second signal is a second time point, the time interval between the first time point and the second time point is fixed in advance.

10. The device according to claim 9, wherein the first signal and the second signal are single frequency carrier signals,

preferably, the first operating frequency is the same as the second operating frequency or differs by only frequency difference value of one intermediate frequency receiver, and
preferably, during the period that the first wireless node (I) is switched from transmitting the first signal to receiving the second signal and during the period that the second wireless node (R) is switched from receiving the first signal to transmitting the second signal, a RF phase-locked loop is always turned on to maintain phase continuity.

11. The device according to claim 9 wherein, the first measurement module (501) and/or the second measurement module (503) are specifically configured to:

determine the first phase difference $H_0$ from the first value and the second value in response to the first operating frequency and the second operating frequency before being changed; or,
determine the second phase difference $H_1$ from the first value and the second value in response to the changed first operating frequency and second operating frequency.

**12.** The device according to claim 9, wherein, the distance determination module (504) is specifically configured to: determine the distance r between the first wireless node (I) and the second wireless node *(R)* by a formula $r = c \times (H_1 - H_0)/4\pi\Delta f$, wherein, c is the speed of light, $\Delta f$ is the preset frequency difference value.

**13.** The device according to any one of claims 9 to 12, wherein, the device is further configured to: perform, by the first wireless node (I) and the second wireless node (R), the preset measurement of the phase difference multiple times in the preset half-duplex communication mode, based on the first operating frequency and the second operating frequency synchronously changed multiple times, to determine the distance between the first wireless node (I) and the second wireless node (R) multiple times, thereby improving the accuracy of the measurement through the superposition of multiple measurements.

**14.** The device according to any one of claims 9 to 12, further comprising a reference module configured to:

connect the first wireless node (I) and the second wireless node (R) through a short cable, in a laboratory environment;

perform, by the first wireless node (I) and the second wireless node (R), the preset measurement of the phase difference repeatedly in the preset half-duplex communication mode, based on the first operating frequency and the second operating frequency before/after being synchronously changed, respectively, to determine a phase difference correction value; and

correct the determined distance between the first wireless node (I) and the second wireless node (R) based on the phase difference correction value.

**Patentansprüche**

**1.** Verfahren zum Messen eines Abstands zwischen Drahtlosknoten, umfassend:

Durchführen, durch einen ersten Drahtlosknoten (I) und einen zweiten Drahtlosknoten (R), einer voreingestellten Messung einer Phasendifferenz in einem voreingestellten Halbduplex-Kommunikationsmodus, um eine erste Phasendifferenz $H_0$ zu bestimmen;

synchrones Ändern einer ersten Betriebsfrequenz des ersten Drahtlosknotens (I) und einer zweiten Betriebsfrequenz des zweiten Drahtlosknotens (R) basierend auf einem voreingestellten Frequenzdifferenzwert;

erneutes Durchführen, durch den ersten Drahtlosknoten (I) und den zweiten Drahtlosknoten (R), der voreingestellten Messung der Phasendifferenz in dem voreingestellten Halbduplex-Kommunikationsmodus basierend auf der synchron geänderten ersten Betriebsfrequenz und zweiten Betriebsfrequenz, um eine zweite Phasendifferenz $H_1$ zu bestimmen; und

Bestimmen des Abstands zwischen dem ersten Drahtlosknoten (I) und dem zweiten Drahtlosknoten (R) durch Durchführen einer Differentialoperation der ersten Phasendifferenz $H_0$ und der zweiten Phasendifferenz $H_1$, **dadurch gekennzeichnet, dass** die voreingestellte Messung der Phasendifferenz Folgendes umfasst:

Erzeugen und Übertragen, durch den ersten Drahtlosknoten (I), eines ersten Signals basierend auf der ersten Betriebsfrequenz;

Mischen und Empfangen, durch den zweiten Drahtlosknoten (R), des ersten Signals basierend auf der zweiten Betriebsfrequenz und Messen einer Phasendifferenz zwischen dem ersten Signal und einem zweiten lokalen Signal, um einen ersten Wert $P_R$,$P'_R$, zu bestimmen, wobei das zweite lokale Signal durch den zweiten Drahtlosknoten (R) basierend auf der zweiten Betriebsfrequenz erzeugt wird;

Erzeugen und Übertragen, durch den zweiten Drahtlosknoten (R), eines zweiten Signals basierend auf der zweiten Betriebsfrequenz;

Mischen und Empfangen, durch den ersten Drahtlosknoten (I), des zweiten Signals basierend auf der ersten Betriebsfrequenz und Messen einer Phasendifferenz zwischen dem zweiten Signal und einem ersten lokalen Signal, um einen zweiten Wert $P_I$,$P'_I$, zu bestimmen, wobei das erste lokale Signal durch den ersten Drahtlosknoten (I) basierend auf der ersten Betriebsfrequenz erzeugt wird; und

Bestimmen der ersten Phasendifferenz $H_0 = P_R + P_I$ und der zweiten Phasendifferenz $H_1 = P'_R + P'_I$ durch Hinzufügen des ersten Werts zu dem zweiten Wert;

wobei die Zeit, zu welcher der erste Drahtlosknoten (I) beginnt, das erste Signal zu übertragen, ein erster Zeitpunkt ist, die Zeit, zu welcher der zweite Drahtlosknoten (R) beginnt, das zweite Signal zu übertragen, ein zweiter Zeitpunkt ist und das Zeitintervall zwischen dem ersten Zeitpunkt und dem zweiten Zeitpunkt im Voraus festgelegt ist.

**2.** Verfahren nach Anspruch 1, wobei das erste Signal und das zweite Signal Einzelfrequenzträgersignale sind.

**3.** Verfahren nach Anspruch 1, wobei die erste Betriebsfrequenz die gleiche wie die zweite Betriebsfrequenz ist oder sich nur um einen Frequenzdifferenzwert eines Zwischenfrequenzempfängers unterscheidet.

**4.** Verfahren nach Anspruch 1, wobei das Bestimmen der ersten Phasendifferenz $H_0$ oder der zweiten Phasendifferenz $H_1$ anhand des ersten Werts und des zweiten Werts insbesondere Folgendes umfasst:

Bestimmen der ersten Phasendifferenz $H_0$ anhand des ersten Werts und des zweiten Werts als Reaktion auf die erste Betriebsfrequenz und die zweite Betriebsfrequenz, bevor diese geändert werden; oder
Bestimmen der zweiten Phasendifferenz $H_1$ anhand des ersten Werts und des zweiten Werts als Reaktion auf die geänderte erste Betriebsfrequenz und zweite Betriebsfrequenz.

**5.** Verfahren nach Anspruch 1, wobei während der Zeitdauer, in welcher der erste Drahtlosknoten (I) vom Übertragen des ersten Signals zum Empfangen des zweiten Signals umgeschaltet wird, und während der Zeitdauer, in welcher der zweite Drahtlosknoten (R) vom Empfangen des ersten Signals zum Übertragen des zweiten Signals umgeschaltet wird, immer eine HF-Phasenregelschleife eingeschaltet ist, um eine Phasenkontinuität aufrechtzuerhalten.

**6.** Verfahren nach Anspruch 1, wobei die Differentialoperation insbesondere Folgendes umfasst:
Bestimmen des Abstands r zwischen dem ersten Drahtlosknoten (I) und dem zweiten Drahtlosknoten (R) durch eine Formel $r = c \times (H_1 - H_0)/4\pi\Delta f$, wobei c die Lichtgeschwindigkeit ist und $\Delta f$ der voreingestellte Frequenzdifferenzwert ist.

**7.** Verfahren nach einem der Ansprüche 1 bis 6, ferner umfassend:
mehrmaliges Durchführen, durch den ersten Drahtlosknoten (I) und den zweiten Drahtlosknoten (R), der voreingestellten Messung der Phasendifferenz in dem voreingestellten Halbduplex-Kommunikationsmodus basierend auf der ersten Betriebsfrequenz und der zweiten Betriebsfrequenz, die synchron mehrmalig geändert werden, um mehrmalig den Abstand zwischen dem ersten Drahtlosknoten (I) und dem zweiten Drahtlosknoten (R) zu bestimmen, wodurch die Genauigkeit der Messung durch die Überlagerung mehrmaliger Messungen verbessert wird.

**8.** Verfahren nach einem der Ansprüche 1 bis 6, ferner umfassend:

Verbinden des ersten Drahtlosknotens (I) und des zweiten Drahtlosknotens (R) über ein kurzes Kabel, in einer Laborumgebung;
wiederholtes Durchführen, durch den ersten Drahtlosknoten (I) und den zweiten Drahtlosknoten (R), der voreingestellten Messung der Phasendifferenz in dem voreingestellten Halbduplex-Kommunikationsmodus basierend auf der ersten Betriebsfrequenz und der zweiten Betriebsfrequenz vor bzw. nach dem synchronen Ändern, um einen Phasendifferenz-Korrekturwert zu bestimmen; und
Korrigieren des bestimmten Abstands zwischen dem ersten Drahtlosknoten (I) und dem zweiten Drahtlosknoten (R) basierend auf dem Phasendifferenz-Korrekturwert.

**9.** Vorrichtung zum Messen eines Abstands zwischen Drahtlosknoten, umfassend:

ein erstes Messmodul (501), das dazu konfiguriert ist, durch einen ersten Drahtlosknoten (I) und einen zweiten Drahtlosknoten (R) eine voreingestellte Messung einer Phasendifferenz in einem voreingestellten Halbduplex-Kommunikationsmodus durchzuführen, um eine erste Phasendifferenz $H_0$ zu bestimmen;
ein Frequenzänderungsmodul (502), das dazu konfiguriert ist, eine erste Betriebsfrequenz des ersten Drahtlosknotens (I) und eine zweite Betriebsfrequenz des zweiten Drahtlosknotens (R) basierend auf einem voreingestellten Frequenzdifferenzwert synchron zu ändern;
ein zweites Messmodul (503), das dazu konfiguriert ist, durch den ersten Drahtlosknoten (I) und den zweiten Drahtlosknoten (R) die voreingestellte Messung der Phasendifferenz in dem voreingestellten Halbduplex-Kommunikationsmodus basierend auf der synchron geänderten ersten Betriebsfrequenz und zweiten Betriebsfrequenz erneut durchzuführen, um eine zweite Phasendifferenz $H_1$ zu bestimmen; und
ein Abstandsbestimmungsmodul (504), das dazu konfiguriert ist, den Abstand zwischen dem ersten Drahtlosknoten (I) und dem zweiten Drahtlosknoten (R) durch Durchführen einer Differentialoperation der ersten Phasendifferenz $H_0$ und der zweiten Phasendifferenz $H_1$ zu bestimmen,
**dadurch gekennzeichnet, dass** das erste Messmodul (501) und/oder das zweite Messmodul (503) insbesondere zu Folgendem konfiguriert sind:

Erzeugen und Übertragen, durch den ersten Drahtlosknoten (I), eines ersten Signals basierend auf der ersten Betriebsfrequenz;

Mischen und Empfangen, durch den zweiten Drahtlosknoten (R), des ersten Signals basierend auf der zweiten Betriebsfrequenz und Messen einer Phasendifferenz zwischen dem ersten Signal und einem zweiten lokalen Signal, um einen ersten Wert $P_R$,$P'_R$, zu bestimmen, wobei das zweite lokale Signal durch den zweiten Drahtlosknoten (R) basierend auf der zweiten Betriebsfrequenz erzeugt wird;

Erzeugen und Übertragen, durch den zweiten Drahtlosknoten (R), eines zweiten Signals basierend auf der zweiten Betriebsfrequenz;

Mischen und Empfangen, durch den ersten Drahtlosknoten (I), des zweiten Signals basierend auf der ersten Betriebsfrequenz und Messen einer Phasendifferenz zwischen dem zweiten Signal und einem ersten lokalen Signal, um einen zweiten Wert $P_I$,$P'_I$, zu bestimmen, wobei das erste lokale Signal durch den ersten Drahtlosknoten (I) basierend auf der ersten Betriebsfrequenz erzeugt wird; und

Bestimmen der ersten Phasendifferenz $H_0 = P_R + P_I$ und der zweiten Phasendifferenz $H_1 = P'_R + P'_I$ durch Hinzufügen des ersten Werts zu dem zweiten Wert;

wobei die Zeit, zu welcher der erste Drahtlosknoten (I) beginnt, das erste Signal zu übertragen, ein erster Zeitpunkt ist, die Zeit, zu welcher der zweite Drahtlosknoten (R) beginnt, das zweite Signal zu übertragen, ein zweiter Zeitpunkt ist und das Zeitintervall zwischen dem ersten Zeitpunkt und dem zweiten Zeitpunkt im Voraus festgelegt ist.

10. Vorrichtung nach Anspruch 9, wobei das erste Signal und das zweite Signal Einzelfrequenzträgersignale sind,

bevorzugt die erste Betriebsfrequenz dieselbe wie die zweite Betriebsfrequenz ist oder sich nur um einen Frequenzdifferenzwert eines Zwischenfrequenzempfängers unterscheidet und

bevorzugt während der Zeitdauer, in welcher der erste Drahtlosknoten (I) vom Übertragen des ersten Signals zum Empfangen des zweiten Signals umgeschaltet wird, und während der Zeitdauer, in welcher der zweite Drahtlosknoten (R) vom Empfangen des ersten Signals zum Übertragen des zweiten Signals umgeschaltet wird, immer eine HF-Phasenregelschleife eingeschaltet ist, um eine Phasenkontinuität aufrechtzuerhalten.

11. Vorrichtung nach Anspruch 9, wobei das erste Messmodul (501) und/oder das zweite Messmodul (503) insbesondere zu Folgendem konfiguriert sind:

Bestimmen der ersten Phasendifferenz $H_0$ anhand des ersten Werts und des zweiten Werts als Reaktion auf die erste Betriebsfrequenz und die zweite Betriebsfrequenz, bevor diese geändert werden; oder

Bestimmen der zweiten Phasendifferenz $H_1$ anhand des ersten Werts und des zweiten Werts als Reaktion auf die geänderte erste Betriebsfrequenz und zweite Betriebsfrequenz.

12. Vorrichtung nach Anspruch 9, wobei das Abstandsbestimmungsmodul (504) insbesondere zu Folgendem konfiguriert ist:

Bestimmen des Abstands r zwischen dem ersten Drahtlosknoten (I) und dem zweiten Drahtlosknoten (R) durch eine Formel $r = c \times (H_1 - H_0)/4\pi\Delta f$, wobei c die Lichtgeschwindigkeit ist und $\Delta f$ der voreingestellte Frequenzdifferenzwert ist.

13. Vorrichtung nach einem der Ansprüche 9 bis 12, wobei die Vorrichtung ferner zu Folgendem konfiguriert ist:
mehrmaliges Durchführen, durch den ersten Drahtlosknoten (I) und den zweiten Drahtlosknoten (R), der voreingestellten Messung der Phasendifferenz in dem voreingestellten Halbduplex-Kommunikationsmodus basierend auf der ersten Betriebsfrequenz und der zweiten Betriebsfrequenz, die synchron mehrmalig geändert werden, um mehrmalig den Abstand zwischen dem ersten Drahtlosknoten (I) und dem zweiten Drahtlosknoten (R) zu bestimmen, wodurch die Genauigkeit der Messung durch die Überlagerung mehrmaliger Messungen verbessert wird.

14. Vorrichtung nach einem der Ansprüche 9 bis 12, ferner umfassend ein Referenzmodul, das zu Folgendem konfiguriert ist:

Verbinden des ersten Drahtlosknotens (I) und des zweiten Drahtlosknotens (R) über ein kurzes Kabel, in einer Laborumgebung;

wiederholtes Durchführen, durch den ersten Drahtlosknoten (I) und den zweiten Drahtlosknoten (R), der voreingestellten Messung der Phasendifferenz in dem voreingestellten Halbduplex-Kommunikationsmodus basierend auf der ersten Betriebsfrequenz und der zweiten Betriebsfrequenz vor bzw. nach dem synchronen Ändern, um einen Phasendifferenz-Korrekturwert zu bestimmen; und

Korrigieren des bestimmten Abstands zwischen dem ersten Drahtlosknoten (I) und dem zweiten Drahtlosknoten (R) basierend auf dem Phasendifferenz-Korrekturwert.

**Revendications**

1. Procédé de mesure d'une distance entre des nœuds sans fil comprenant :

   la réalisation, par un premier nœud sans fil (I) et un deuxième nœud sans fil (R), d'une mesure prédéfinie d'une différence de phase dans un mode de communication semi-duplex prédéfini, afin de déterminer une première différence de phase $H_0$ ;
   le changement de manière synchrone d'une première fréquence de fonctionnement du premier nœud sans fil (I) et d'une deuxième fréquence de fonctionnement du deuxième nœud sans fil (R) sur la base d'une valeur de différence de fréquence prédéfinie ;
   la réalisation à nouveau, par le premier nœud sans fil (I) et le deuxième nœud sans fil *(R),* de la mesure prédéfinie de la différence de phase dans le mode de communication semi-duplex prédéfini, sur la base de la première fréquence de fonctionnement et de la deuxième fréquence de fonctionnement changées de manière synchrone, afin de déterminer une deuxième différence de phase $H_1$ ; et
   la détermination de la distance entre le premier nœud sans fil (I) et le deuxième nœud sans fil (R) en réalisant un fonctionnement différentiel de la première différence de phase $H_0$ et de la deuxième différence de phase $H_1$, **caractérisé en ce que** la mesure prédéfinie de la différence de phase comprend :

   la génération et la transmission, par le premier nœud sans fil (I), d'un premier signal sur la base de la première fréquence de fonctionnement ;
   le mélange et la réception, par le deuxième nœud sans fil *(R),* du premier signal sur la base de la deuxième fréquence de fonctionnement, et la mesure d'une différence de phase entre le premier signal et un deuxième signal local afin de déterminer une première valeur $P_R$, $P'_R$, dans lequel le deuxième signal local est généré par le deuxième nœud sans fil (R) sur la base de la deuxième fréquence de fonctionnement ;
   la génération et la transmission, par le deuxième nœud sans fil *(R),* d'un deuxième signal sur la base de la deuxième fréquence de fonctionnement ;
   le mélange et la réception, par le premier nœud sans fil (I), du deuxième signal sur la base de la première fréquence de fonctionnement, et la mesure d'une différence de phase entre le deuxième signal et un premier signal local afin de déterminer une deuxième valeur $P_I$, $P'_I$, dans lequel le premier signal local est généré par le premier nœud sans fil (I) sur la base de la première fréquence de fonctionnement ; et
   la détermination de la première différence de phase $H_0 = P_R + P_I$ et de la deuxième différence de phase $H_1 = P'_R + P'_I$ en ajoutant la première valeur à la deuxième valeur ;
   dans lequel, le moment où le premier nœud sans fil (I) commence à transmettre le premier signal est un premier point temporel, le moment où le deuxième nœud sans fil *(R)* commence à transmettre le deuxième signal est un deuxième point temporel, et l'intervalle de temps entre le premier point temporel et le deuxième point temporel est fixé à l'avance.

2. Procédé selon la revendication 1, dans lequel, le premier signal et le deuxième signal sont des signaux porteurs à fréquence unique.

3. Procédé selon la revendication 1, dans lequel, la première fréquence de fonctionnement est la même que la deuxième fréquence de fonctionnement ou ne diffère que par une valeur de différence de fréquence d'un récepteur de fréquence intermédiaire.

4. Procédé selon la revendication 1, dans lequel la détermination de la première différence de phase $H_0$ ou de la deuxième différence de phase $H_1$ à partir de la première valeur et de la deuxième valeur comprend spécifiquement :

   la détermination de la première différence de phase $H_0$ à partir de la première valeur et de la deuxième valeur en réponse à la première fréquence de fonctionnement et à la deuxième fréquence de fonctionnement avant qu'elles soient changées ; ou,
   la détermination de la deuxième différence de phase $H_1$ à partir de la première valeur et de la deuxième valeur en réponse à la première fréquence de fonctionnement et à la deuxième fréquence de fonctionnement changées.

5. Procédé selon la revendication 1, dans lequel, pendant la période où le premier nœud sans fil (I) passe de la transmission du premier signal à la réception du deuxième signal et pendant la période où le deuxième nœud sans fil

(R) passe de la réception du premier signal à la transmission du deuxième signal, une boucle RF à verrouillage de phase est toujours activée pour maintenir une continuité de phase.

6. Procédé selon la revendication 1, dans lequel, le fonctionnement différentiel comprend spécifiquement :
la détermination de la distance r entre le premier nœud sans fil (I) et le deuxième nœud sans fil (R) par une formule $r = c \times (H_1 - H_0)/4\pi\Delta f$, dans lequel, c est la vitesse de la lumière, $\Delta f$ est la valeur de différence de fréquence prédéfinie.

7. Procédé selon l'une quelconque des revendications 1 à 6, comprenant en outre :
la réalisation, par le premier nœud sans fil (I) et le deuxième nœud sans fil (R), de la mesure prédéfinie de la différence de phase plusieurs fois dans le mode de communication semi-duplex prédéfini, sur la base de la première fréquence de fonctionnement et de la deuxième fréquence de fonctionnement changées de manière synchrone plusieurs fois, afin de déterminer la distance entre le premier nœud sans fil ((I) et le deuxième nœud sans fil (R) plusieurs fois, améliorant ainsi la précision de la mesure par la superposition de multiples mesures.

8. Procédé selon l'une quelconque des revendications 1 à 6, comprenant en outre :

la connexion du premier nœud sans fil (I) et du deuxième nœud sans fil (R) par un câble court, dans un environnement de laboratoire ;
la réalisation, par le premier nœud sans fil (I) et le deuxième nœud sans fil (R), de la mesure prédéfinie de la différence de phase de manière répétée dans le mode de communication semi-duplex prédéfini, sur la base de la première fréquence de fonctionnement et de la deuxième fréquence de fonctionnement avant/après avoir été changées de manière synchrone, respectivement, afin de déterminer une valeur de correction de différence de phase ; et
la correction de la distance déterminée entre le premier nœud sans fil (I) et le deuxième nœud sans fil (R) sur la base de la valeur de correction de différence de phase.

9. Dispositif de mesure d'une distance entre des nœuds sans fil, comprenant :

un premier module de mesure (501) configuré pour réaliser, par un premier nœud sans fil (I) et un deuxième nœud sans fil (R), une mesure prédéfinie d'une différence de phase dans un mode de communication semi-duplex prédéfini, afin de déterminer une première différence de phase $H_0$ ;
un module de changement de fréquence (502) configuré pour changer de manière synchrone une première fréquence de fonctionnement du premier nœud sans fil (I) et une deuxième fréquence de fonctionnement du deuxième nœud sans fil (R) sur la base d'une valeur de différence de fréquence prédéfinie ;
un deuxième module de mesure (503) configuré pour réaliser à nouveau, par le premier nœud sans fil (I) et le deuxième nœud sans fil (R), la mesure prédéfinie de la différence de phase dans le mode de communication semi-duplex prédéfini, sur la base de la première fréquence de fonctionnement et de la deuxième fréquence de fonctionnement changées de manière synchrone, afin de déterminer une deuxième différence de phase $H_1$ ; et
un module de détermination de distance (504) configuré pour déterminer la distance entre le premier nœud sans fil (1) et le deuxième nœud sans fil (R) en réalisant un fonctionnement différentiel de la première différence de phase $H_0$ et de la deuxième différence de phase $H_1$,
**caractérisé en ce que** le premier module de mesure (501) et/ou le deuxième module de mesure (503) sont spécifiquement configurés pour :

générer et transmettre, par le premier nœud sans fil (I), un premier signal sur la base de la première fréquence de fonctionnement ;
mélanger et recevoir, par le deuxième nœud sans fil (R), le premier signal sur la base de la deuxième fréquence de fonctionnement, et mesurer une différence de phase entre le premier signal et un deuxième signal local afin de déterminer une première valeur $P_R$, $P'_R$, dans lequel le deuxième signal local est généré par le deuxième nœud sans fil (R) sur la base de la deuxième fréquence de fonctionnement ;
générer et transmettre, par le deuxième nœud sans fil (R), un deuxième signal sur la base de la deuxième fréquence de fonctionnement ;
mélanger et recevoir, par le premier nœud sans fil (I), le deuxième signal sur la base de la première fréquence de fonctionnement, et mesurer une différence de phase entre le deuxième signal et un premier signal local afin de déterminer une deuxième valeur $P_I$, $P'_I$, dans lequel le premier signal local est généré par le premier nœud sans fil (I) sur la base de la première fréquence de fonctionnement ; et
déterminer la première différence de phase $H_0 = P_R + P_I$ et la deuxième différence de phase $H_1 = P'_R + P'_I$ en ajoutant la première valeur à la deuxième valeur ;

dans lequel, le moment où le premier nœud sans fil (I) commence à transmettre le premier signal est un premier point temporel, et le moment où le deuxième nœud sans fil (R) commence à transmettre le deuxième signal est un deuxième point temporel, l'intervalle de temps entre le premier point temporel et le deuxième point temporel est fixé à l'avance.

10. Dispositif selon la revendication 9, dans lequel le premier signal et le deuxième signal sont des signaux porteurs à fréquence unique,

de préférence, la première fréquence de fonctionnement est la même que la deuxième fréquence de fonctionnement ou ne diffère que par une valeur de différence de fréquence d'un récepteur de fréquence intermédiaire, et de préférence, pendant la période où le premier nœud sans fil (I) passe de la transmission du premier signal à la réception du deuxième signal et pendant la période où le deuxième nœud sans fil (R) passe de la réception du premier signal à la transmission du deuxième signal, une boucle RF à verrouillage de phase est toujours activée pour maintenir une continuité de phase.

11. Dispositif selon la revendication 9 dans lequel, le premier module de mesure (501) et/ou le deuxième module de mesure (503) sont spécifiquement configurés pour :

déterminer la première différence de phase $H_0$ à partir de la première valeur et de la deuxième valeur en réponse à la première fréquence de fonctionnement et à la deuxième fréquence de fonctionnement avant qu'elles soient changées ; ou,
déterminer la deuxième différence de phase $H_1$ à partir de la première valeur et de la deuxième valeur en réponse à la première fréquence de fonctionnement et à la deuxième fréquence de fonctionnement changées.

12. Dispositif selon la revendication 9, dans lequel, le module de détermination de distance (504) est spécifiquement configuré pour :
déterminer la distance r entre le premier nœud sans fil (I) et le deuxième nœud sans fil (R) par une formule $r = c \times (H_1 - H_0)/4\pi\Delta f$, dans lequel, c est la vitesse de la lumière, $\Delta f$ est la valeur de différence de fréquence prédéfinie.

13. Dispositif selon l'une quelconque des revendications 9 à 12, dans lequel, le dispositif est en outre configuré pour :
réaliser, par le premier nœud sans fil (I) et le deuxième nœud sans fil (R), la mesure prédéfinie de la différence de phase plusieurs fois dans le mode de communication semi-duplex prédéfini, sur la base de la première fréquence de fonctionnement et de la deuxième fréquence de fonctionnement changées de manière synchrone plusieurs fois, afin de déterminer la distance entre le premier nœud sans fil (I) et le deuxième nœud sans fil (R) plusieurs fois, améliorant ainsi la précision de la mesure par la superposition de multiples mesures.

14. Dispositif selon l'une quelconque des revendications 9 à 12, comprenant en outre un module de référence configuré pour :

connecter le premier nœud sans fil (I) et le deuxième nœud sans fil (R) par un câble court, dans un environnement de laboratoire ;
réaliser, par le premier nœud sans fil (I) et le deuxième nœud sans fil (R), la mesure prédéfinie de la différence de phase de manière répétée dans le mode de communication semi-duplex prédéfini, sur la base de la première fréquence de fonctionnement et de la deuxième fréquence de fonctionnement avant/après avoir été changées de manière synchrone, respectivement, afin de déterminer une valeur de correction de différence de phase ; et
corriger la distance déterminée entre le premier nœud sans fil (I) et le deuxième nœud sans fil (R) sur la base de la valeur de correction de différence de phase.

S101

a first wireless node and a second wireless node perform a preset measurement of a phase difference in a preset half-duplex communication mode to determine a first phase difference

S102

a first operating frequency of the first wireless node and a second operating frequency of the second wireless node are synchronously changed based on a preset frequency difference value

S103

based on the synchronously changed first operating frequency and second operating frequency, the first wireless node and the second wireless node perform the preset measurement of the phase difference in the preset half-duplex communication mode again to determine a second phase difference

S104

the distance between the first wireless node and the second wireless node is determined by performing a differential operation of the first phase difference and the second phase difference

FIG. 1

TRx

the first wireless node $I$

TRx

the second wireless node $R$

FIG. 2

the first wireless node generates and transmits a first signal based on the first operating frequency

S301

the second wireless node mixes and receives the first signal based on the second operating frequency and measures a phase difference between the first signal and a second local signal to determine a first value

S302

the second wireless node generates and transmits a second signal based on the second operating frequency

S303

the first wireless node mixes and receives the second signal based on the first operating frequency and measures a phase difference between the second signal and a first local signal to determine a second value

S304

the first phase difference or the second phase difference is determined from the first value and the second value

S305

FIG. 3

wave band 1

wave band 4

first wireless node I

the second wireless node R

wave band 2

wave band 3

t0  t2        t3                    t4  t6        t7

FIG. 4

<u>50</u>

first measurement module 501

frequency changing module 502

second measurement module 503

distance determination module 504

FIG. 5

device for measuring distance between wireless nodes

processor

总线

memory

FIG. 6

**EP 3 742 194 B1**

**Patent documents cited in the description**

- US 20160178744 A1
- US 20020094786 A1